Europäisches Patentamt

European Patent Office

Office européen des brevets

(11) Numéro de publication: **0 099 293**
**A2**

## (12) DEMANDE DE BREVET EUROPEEN

(21) Numéro de dépôt: 83401400.3

(22) Date de dépôt: 07.07.83

(51) Int. Cl.³: **E 21 B 17/043**
**F 16 L 15/00**

(30) Priorité: 07.07.82 FR 8211939
23.12.82 FR 8221643

(43) Date de publication de la demande:
25.01.84 Bulletin 84/4

(84) Etats contractants désignés:
AT BE CH DE FR GB IT LI LU NL SE

(71) Demandeur: MARINOVATION
30, avenue de l'Amiral Lemonnier
F-78160 Marly-le-Roi(FR)

(72) Inventeur: Nobileau, Philippe
12 rue Voltaire
F-78100 Saint-Germain-en-Laye(FR)

(74) Mandataire: Robert, Jean-Pierre et al,
Cabinet Armengaud Jeune Casanova et Lepeudry 23,
boulevard de Strasbourg
F-75010 Paris(FR)

(54) Procédé de verrouillage de deux éléments vissés, éléments et dispositif pour mettre en oeuvre ce procédé.

(57) L'invention concerne un procédé de verrouillage mutuel de deux éléments (1,2) vissés l'un sur l'autre selon lequel on prévoit qu'une portion (8) de l'un des éléments (2) soit placée en recouvrement d'un logement 7 pourvu dans l'autre élément (1) et en chevauchement d'une arête (7b) limitant ledit logement; on cisaille ensuite ladite portion (8) ou une partie (9) de celle-ci au droit de ladite arête (7b) pour qu'elle pénètre dans le logement (7), le front de cisaillement coopérant alors avec la paroi (7a) du logement comportant l'arête (7b) pour former une butée s'opposant au dévissage.

Application particulièrement intéressante au raccord des tubes de forage et exploration pétroliers off-shore.

Fig.2

Procédé de verrouillage de deux éléments vissés, éléments et dispositif pour mettre en oeuvre ce procédé

La plupart des assemblages vissés imposent une précontrainte initiale garante de la bonne tenue de l'assemblage lorsque,en service, celui-ci est sollicité. Pour cependant prévenir un éventuel desserrage (rendu possible lorsque la sollicitation en service excède la précontrainte de serrage ou dans le cas de vibration, battage...) il est nécessaire de verrouiller mutuellement les deux éléments vissés. Ce verrouillage est réalisé de manière connue par divers moyens ayant pour fonction de créer un arrêt positif en rotation mutuelle des deux éléments. On peut à cet effet utiliser une pièce rapportée sur l'un des éléments de l'assemblage, solidaire en rotation de ce dernier, qui comporte un élément mobile ou déformable venant après vissage coopérer avec l'autre élément pour former une butée à l'encontre du dévissage. Il est connu également de créer une déformation permanente des deux éléments vissés pour les lier en rotation (poinçonnage etc...) certains de ces verrouillages sont démontables, d'autres non.

La présente invention entend proposer un verrouillage dont le principe consiste en une déformation permanente de l'un des éléments (ou d'une portion de celui-ci) pour coopérer avec une butée de l'autre prévue à priori et qui, avant verrouillage, n'interfère pas avec le premier élément. Une application particulièrement intéressante de l'invention réside dans le verrouillage des connecteurs de tubulures employées dans le forage et l'exploration pétroliers. La taille de ces connecteurs est importante (jusqu'à environ 80 centimètres de diamètre) ce qui a guidé la conception de l'invention tant en ce qui concerne le procédé que les moyens et dispositif nécessaires pour la mettre en oeuvre, aucun des dispositifs connus à ce jour n'étant susceptible de donner pleinement satisfaction de manière simple dans les dimensions considérées.

A cet effet, la présente invention concerne en premier lieu un procédé de verrouillage mutuel de deux éléments vissés l'un sur l'autre dans une position relative prédéterminée correspondant notamment à l'obtention d'une contrainte de serrage donnée.

Selon l'invention, il consiste essentiellement en ce que l'on prévoie qu'une portion de l'un des éléments soit placée en recouvrement d'un logement pourvu dans l'autre élément et en chevauchement d'une arête limitant ledit logement, et en ce que l'on cisaille ladite portion entre un outil extérieur et ladite arête de manière qu'elle pénétre dans ledit logement, le front de cisaillement coopérant avec la paroi dudit logement terminée par l'arête pour former une butée s'opposant au dévissage.

En second lieu l'invention a pour objet des éléments d'assemblage par vissage dans lesquels l'un des éléments comporte une encoche délimitée par une arête extérieure située à la surface de l'élément tandis que l'autre élément comporte une portion destinée à recouvrir l'encoche en chevauchant ladite arête, ladite portion étant en une pièce avec ledit autre élément et formée par une bande perpendiculaire à ladite arête.

Dans un premier mode de réalisation, l'encoche est ménagée dans l'élément mâle tandis que la bande est découpée dans l'élément femelle. Ainsi, soit l'arête est axiale et la bande susdite est délimitée par deux usinages perpendiculaires à l'axe de l'assemblage d'une jupe prolongeant la pièce femelle et recouvrant ladite arête, soit l'arête est radiale sur un épaulement de la pièce mâle et la portion susdite est une collerette de la pièce femelle dans laquelle ladite bande est délimitée par deux usinages concentriques.

Il sera avantageux que l'un des usinages limitant ladite bande soit constitué par le bord même de la jupe ou de la collerette susdite.

Enfin le dernier objet de l'invention est un dispositif pour mettre en oeuvre le procédé susdit avec lesdits éléments comportant un couteau, un moyen de propulsine du couteau en direction du logement susdit et des moyens pour la mise en place du couteau par rapport à ladite arête. De préférence, les moyens de mise en place susdits comportent un gabarit situé d'un côté du couteau pour coopérer avec la portion de l'encoche susdite découverte par l'un des usinages limitant la bande susdite et une butée s'étendant de l'autre côté du couteau qui coopère avec l'un des bords de la bande à cisailler pour centrer latéralement le couteau par rapport à cette bande.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :

- la figure 1 est une vue schématique de deux éléments vissés l'un sur l'autre pourvu des moyens pour mettre en oeuvre le procédé selon l'invention,

- la figure 1A est une vue partielle en coupe selon la ligne IA de la figure 1,

- la figure 2 est une vue partielle d'un autre mode de réalisation de l'invention,

- les figures 3 et 4 illustrent par deux coupes schématiques un mode de réalisation du dispositif pour mettre en oeuvre le procédé de l'invention.

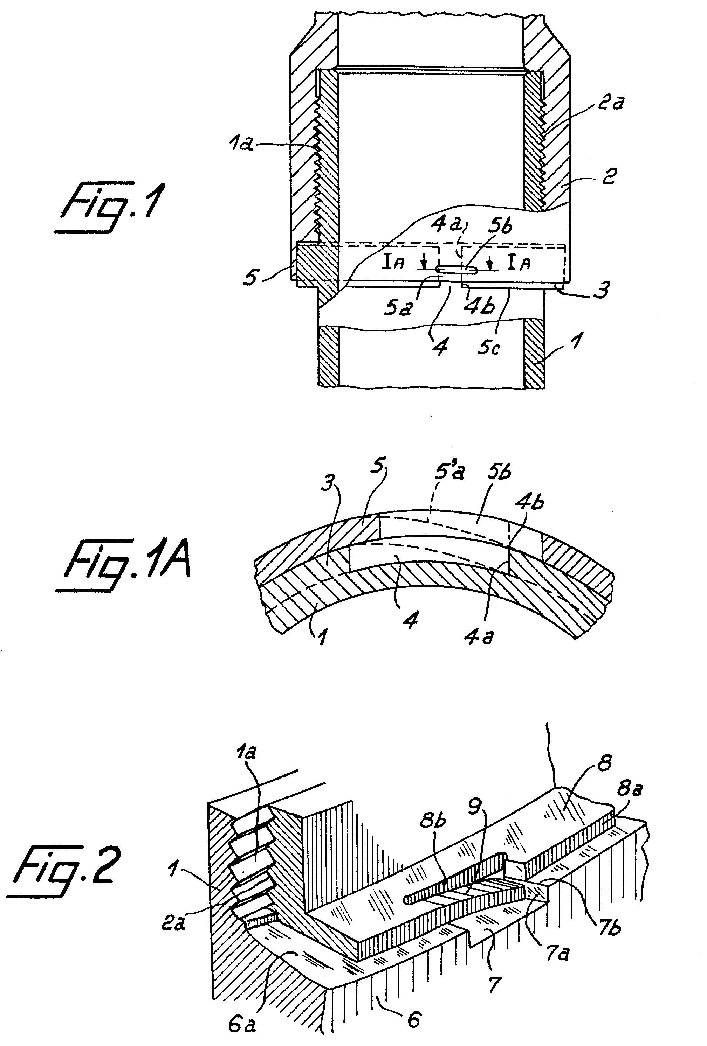

En se reportant tout d'abord aux figures 1 et 1A on voit un élément 1 équipé à sa partie supérieure d'un filetage externe 1a de connexion avec un élément 2 comportant un filetage interne correspondant 2a. A la base du filetage 1a l'élément 1 comporte un épaulement 3 dans l'épaisseur duquel et dans le sens axial de l'assemblage, on a ménagé un logement 4 formé par exemple par un fraisage. Ce fraisage est latéralement limité par au moins une paroi 4a dont l'intersection avec la surface extérieure de l'épaulement 3 détermine une arête 4b.

L'élément 2 est prolongé au-delà de son filetage 2a par une jupe 5 venant en recouvrement au moins partiel de l'épaulement 3 et notamment du logement 4 en chevauchant l'arête 4b. Le procédé selon l'invention consiste essentiellement à cisailler la portion de jupe 5 située au droit de l'arête 4b au moyen d'un outil extérieur, ladite arête formant avantageusement l'une des "mâchoires" de la cisaille. Par cette opération on crée donc un front de cisaillement qui est enfoncé dans le logement 4 et qui coopère intimement avec la paroi 4a susdite. Cette coopération forme donc une butée de verrouillage des deux éléments à l'encontre de leur dévissage.

Pour faciliter l'opération de cisaillement on aura délimité dans la jupe 5 une portion en forme de bande 5a par le moyen de deux usinages (fentes ou lumières) telles que 5b d'une longueur déterminée de manière qu'en fin de serrage, la bande ainsi définie soit placée en chevauchement de l'arête 4b. Pour des raisons que l'on explicitera ci-après l'une des fentes ménagées pour déterminer la bande susdite aura une longueur suffisante pour qu'elle s'étende toujours au-dessus de la totalité de la largeur du logement 4. On aura noté que ci-dessus il est fait état de deux fentes. Le mode préféré de réalisation de l'invention est celui représenté sur la figure 1 dans lequel l'une des fentes n'exite pas. C'est le bord inférieur 5c de la jupe 5 qui joue le rôle de la fente devant posséder une longueur permettant de toujours découvrir la totalité de la largeur du logement 4. Dans cette configuration, cette fonction est assurée si la jupe 5 ne recouvre que partiellement l'épaulement 3.

En 5'a la figure 1A montre la forme que prend la bande 5a après cisaillement.

Sur la figure 2, l'élément 1 possède un épaulement 6 sur la face radiale 6a duquel on a pratiqué une rainure 7. L'élément femelle 2 possède quant à lui une collerette 8 dans laquelle, entre le bord extérieur 8a et une lumière 8b concentrique au bord 8a, on a délimité une bande 9. Cette dernière vient chevaucher en fin de serrage l'arête 7b que forme l'intersection d'une paroi 7a de la rainure 7 avec la face 6a de l'épaulement 6 au droit de laquelle on pratique le cisaillage susdit. Le front de cisaillement constitue comme dans le cas précédent, avec la paroi 7a un ensemble de butées de verrouillage s'opposant au desserrage de l'assemblage.

Il faut noter que la longueur de la lumière (5b ou 8b) doit être telle, au minimum, pour que quelles que soient les tolérances de fabrication et de serrage de l'assemblage elle vienne toujours en chevauchement en fin de serrage de l'arête (4b ou 7b). En outre sa longueur devra également être déterminée pour que, au moment du cisaillage, la portion de bande qui flèchit ne soit pas trop courte donc trop raide pour que le front de cisaillage coopère sur la totalité de sa surface avec la paroi du logement située sous l'arête.

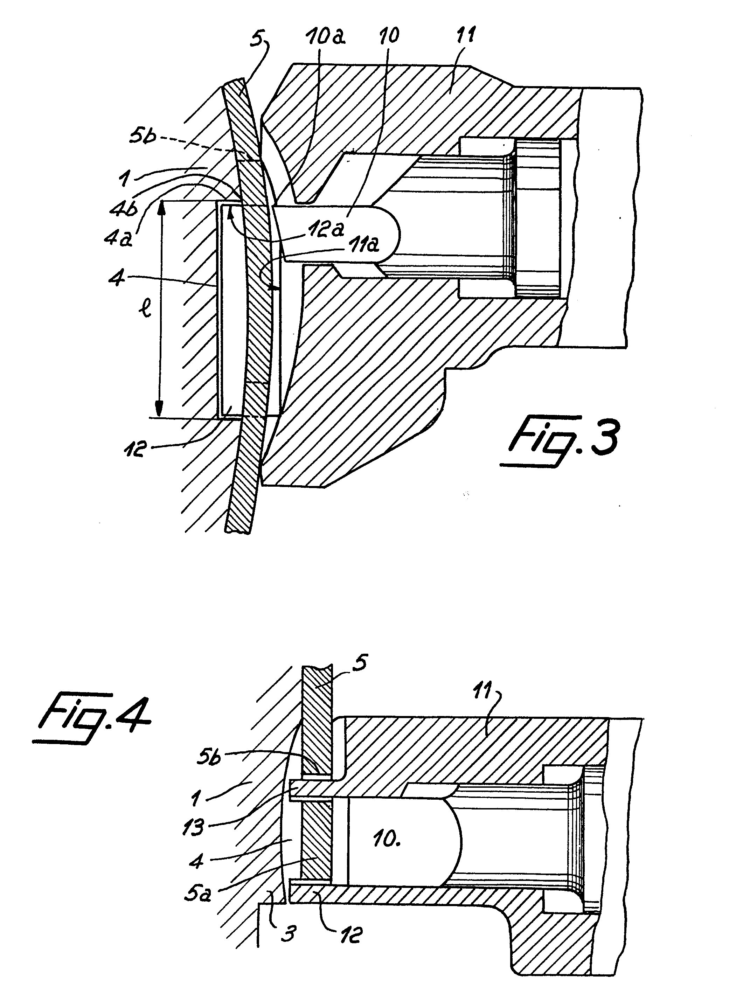

Sur les figures 3 et 4, on a schématisé un dispositif, pour mettre en oeuvre le procédé selon l'invention, de manière simple et rapide.

Il a été exposé ci-dessus que l'opération de cisaillage intervenait entre un couteau extérieur et l'arête du logement. Pour que ce cisaillage soit correctement effectué, il convient donc de disposer précisément le couteau par rapport à l'arête. Pour ce faire, le dispositif selon l'invention comprend un couteau 10 monté à coulissement et guidé dans une tête 11 dont l'extrémité avant 11a est conformée de manière à prendre un appui stable sur la surface extérieure de la jupe 5. La tête 11 comporte en outre, en projection longitudinale par rapport à sa face avant 11a, une première plaque 12 située sous le couteau 10 dont la largeur l est sensiblement égale à celle du logement 4. En outre cette plaque est placée par rapport au couteau de manière que son bord 12a qui vient en appui avec la paroi 4a du logement 4 soit sensiblement dans l'alignement de l'arête 10a active de ce dernier. De ce fait, lorsqu'on présente l'outil en regard de la bande 5a à cisailler, la plaque 12 constitue un moyen de centrage de la tête, en coopérant sous le bord 5c de la bande avec le logement 4.

6

De manière auxiliaire, mais avantageuse une seconde plaque 13 fait saillie à l'avant de la tête 11. Située au-dessus du couteau 10, elle pénètre dans la fente 5b et ainsi constitue un moyen de positionnement en hauteur du couteau qui se trouve alors placé juste en face de la bande 5a.

Ce qui vient d'être décrit en regard des figures 3 et 4 s'applique aux dispositions de l'invention dans leur forme des figures 1 et 1A. Il suffit d'une adaptation de la forme de la tête, compte tenu de son encombrement extérieur pour appliquer l'outil décrit à la forme de réalisation de la figure 2. A cet égard on notera l'avantage de prévoir un épaulement 6 débordant latéralement de la collerette 8 pour une bonne coopération de la plaque gabarit 12 avec la partie découverte externe du logement 7.

La propulsion de l'outil 10 par rapport à la tête peut être assurée par un organe moteur connu en lui-même. Il peut s'agir par exemple d'un vérin hydraulique dont le corps serait sanglé sur l'assemblage alors que la tige de piston coopréreraitavec le couteau. Un dispositif avantageux est constitué par un pistolet venant s'ajuster sur la tête et comportant un marteau actionné par l'explosion d'une cartouche . On s'est rendu compte à l'expérience qu'un tel dispositif pouvait sectionner sans difficulté une section de 150 millimètres carrés. L'intérêt d'un pistolet réside dans la simplicité avec laquelle il peut être mis en oeuvre notamment dans l'application de l'invention au raccordement de tubes d'exploration pétrolière off-shore.

On notera enfin qu'il est simple de déverrouiller l'assemblage en soulevant la bande (5a, 9) pour l'extraire du logement (4, 7).

L'invention trouve une application intéressante dans le domaine des raccords vissés notamment de grands diamètres.

Elle n'est pas limitée à la description qui vient d'en être donnée mais couvre au contraire toutes les variantes qui pourraient lui être apportées sans sortir du son cadre ou de son esprit.

REVENDICATIONS

1.- Procédé de verrouillage mutuel de deux éléments (1,2) vissés l'un sur l'autre dans une position relative prédéterminée correspondant notamment à l'obtention d'une contrainte de serrage donnée, caractérisé en ce que l'on prévoit qu'une portion (5,8) de l'un des éléments (2) soit placée en recouvrement d'un logement (4,7) pourvu dans l'autre élément (1) et en chevauchement d'une arête (4b, 7b) limitant ledit logement, et en ce que l'on cisaille ladite portion (5,8) entre un outil extérieur et ladite arête (4b, 7b) de manière qu'elle pénètre dans ledit logement (4,7), le front de cisaillement coopérant avec la paroi (4a, 7a) dudit logement terminée par l'arête (4b, 7b) pour former une butée s'opposant au dévissage.

2.- Eléments d'assemblage par vissage caractérisés en ce que l'un des éléments (1) comporte une encoche (4,7) délimitée par une arête (4b, 7b) extérieure située à la surface de l'élément (1) tandis que l'autre élément (2) comporte une portion (5,8) destinée à recouvrir l'encoche (4,7) en chevauchant ladite arête (4b, 7b), ladite portion (5,8) étant en une pièce avec ledit autre élément et formée par une bande (5a, 9) perpendiculaire à ladite arête (4b,7b).

3.- Eléments selon la revendication 2, caractérisés en ce que l'encoche (4,7) est ménagée dans l'élément mâle (1) tandis que la bande (5a, 9) est découpée dans l'élément femelle (2).

4.- Eléments selon la revendication 3, caractérisés en ce que l'arête (4b) est axiale, la bande (5a) susdite étant délimitée par deux usinages (5b, 5c) perpendiculaires à l'axe de l'assemblage d'une jupe (5) prolongeant la pièce femelle (2) et recouvrant ladite arête (4b).

5.- Eléments selon la revendication 3, caractérisés en ce que l'arête (7b) est radiale sur un épaulement (6) de la pièce mâle (1) tandis que la portion (8) susdite est une collerette (8) de la pièce femelle dans laquelle ladite bande (9) est délimitée par deux usinages concentriques (8a, 8b).

6.- Eléments selon la revendication 4, ou la revendication 5, caractérisés en ce que l'un des usinages(5c, 8a) limitant la bande (5a, 9) susdite est constitué par le bord même de la jupe (5) ou de la collerette (8) susdites.

7.- Dispositif pour mettre en oeuvre le procédé selon la revendication 1, avec des éléments selon l'une quelconque des revendications 2 à 6, caractérisé en ce qu'il comporte un couteau (10), un moyen de propulsion du couteau (10), en direction du logement susdit et des moyens (12, 13) pour la mise en place du couteau par rapport à ladite arête (4b, 7b).

8.- Dispositif selon la revendication 7, caractérisé en ce que lesdits moyens (12, 13) comportent en gabarit (12) situé d'un côté du couteau (10) pour coopérer avec la portion de l'encoche (4,7) susdite découverte par l'un des usinages (5c, 8a) limitant la bande (5a, 9) susdite.

9.- Dispositif selon la revendication 8, caractérisé en ce que lesdits moyens (12, 13) comportent une butée (13) s'étendant de l'autre côté du couteau (10) qui coopère avec l'un des bords de la bande (5a, 9) à cisailler pour centrer latéralement le couteau (10) par rapport à cette bande (5a, 9).

_Fig.1_

_Fig.1A_

_Fig.2_

_Fig.3_

_Fig.4_